## Europäisches Patentamt
## European Patent Office
## Office européen des brevets

(19)

(11) Veröffentlichungsnummer: **0 176 038**
**B1**

(12) **EUROPÄISCHE PATENTSCHRIFT**

(45) Veröffentlichungstag der Patentschrift: **16.05.90**

(21) Anmeldenummer: **85111863.8**

(22) Anmeldetag: **19.09.85**

(51) Int. Cl.⁵: **G 01 S 7/62**, G 01 S 15/89, G 10 K 11/34

(54) **Echtzeitdarstellung eines Ultraschall-Compound-Bildes.**

(30) Priorität: **25.09.84 CH 4576/84**

(43) Veröffentlichungstag der Anmeldung:
**02.04.86 Patentblatt 86/14**

(45) Bekanntmachung des Hinweises auf die
Patenterteilung:
**16.05.90 Patentblatt 90/20**

(84) Benannte Vertragsstaaten:
**CH DE FR GB IT LI NL SE**

(56) Entgegenhaltungen:
**EP-A-0 039 434**
**EP-A-0 123 411**
**AU-A-504 192**
**DE-A-2 811 699**
**DE-A-3 124 655**
**DE-A-3 308 995**
**FR-A-2 531 783**
**US-A-4 159 462**
**US-A-4 319 489**

(73) Patentinhaber: **KONTRON INSTRUMENTS
HOLDING N.V.
130 Schottegatwegoost
Willemstad Curacao (AN)**

(72) Erfinder: **Fehr, Rainer
Im Wygärtli 36
CH-4114 Hofstetten (CH)**
Erfinder: **Grandchamp, Pierre-André, Dr.
Loogstrasse 26
CH-4142 Münchenstein (CH)**
Erfinder: **Krummenacher, Peter
Bleumatthalde 12
CH-5264 Gipf-Oberfrick (CH)**

(74) Vertreter: **Körber, Wolfhart, Dr. et al
Patentanwälte Dipl.-Ing. H. Mitscherlich Dipl.-
Ing. K. Gunschmann Dr.rer.nat. W. Körber
Dipl.Ing. J. Schmidt-Evers Dipl.-Ing. W. Melzer
Steinsdorfstrasse 10
D-8000 München 22 (DE)**

Courier Press, Leamington Spa, England.

EP 0 176 038 B1

**Beschreibung**

Die Erfindung betrifft ein Verfahren zum Erzeugen eines zusammengesetzten Ultraschall-Querschnittbildes eines Körpers nach dem Gattungsbegriff des Patentanspruchs 1. Die Erfindung betrifft außerdem eine Bildsignal-Verarbeitungseinheit für ein Ultraschall-Abbildungssystem nach dem Gattungsbegriff des Patentanspruchs 2, sowie ein Ultraschall-Abbildungssystem nach dem Gattungsbegriff des Patentanspruchs 9.

Es ist ein Verfahren zum Erzeugen eines zusammengesetzten Ultraschall-Querschnittbildes bekannt (D. P. Shattuck und O. T. von Ramm, Ultrasonic Imaging 4, 1982, Seiten 93 bis 107), das mit einem System durchgeführt wird, das mit einer phasengesteuerten Ultraschall-Wandleranordnung ("phased array") arbeitet und von einer zentralen Steuereinheit gesteuert wird. Mit der Wandleranordnung werden in rascher Folge mehrere sich teilweise überdeckende Sektor-Scans durchgeführt. Auf diese Weise wird ein sogenannter Echtzeit-Compound-Scan durchgeführt. Das mit jedem Sektor-Scan erzeugte Ultraschall-Querschnittbild wird mit einer Oszilloskop-Anzeige sichtbar gemacht, die mit der Wandleranordnung über einen Echosignalempfänger verbunden ist. Auf diese Weise wird auf dem Bildschirm der Oszilloskop-Anzeige durch bloße Überlagerung der mit mehreren Sektor-Scans erzeugten Bilder zwar ein Echtzeit-Compoundbild dargestellt, die Qualität dieses Bildes ist jedoch so schlecht, daß es keine zuverlässige medizinische Diagnose ermöglichen kann. Diese schlechte Bildqualität ist hauptsächlich auf zeitliche und örtliche Schwankungen der Helligkeit der Bildpunkte des Compound-Bildes zurückzuführen. Die zeitlichen Helligkeitsschwankungen sind dadurch bedingt, daß die Sektor-Scans nacheinander durchgeführt werden. Die örtlichen Helligkeitsschwankungen sind durch die Überlagerung von sich teilweise überdeckenden Sektor-Scans bedingt. Um ein Compound-Bild brauchbarer Qualität zu erzeugen, wird bei diesem bekannten Verfahren jedes der mit der Oszilloskop-Anzeige dargestellten Bilder mit einer Videokamera aufgenommen und zunächst mit Hilfe eines Video-Recorders gespeichert. Zur Erzeugung eines sogenannten Compound-Bildes werden die Bildsignale von vier der nacheinander gespeicherten Bilder miteinander kombiniert. Dies wird in einem mit dem Video-Recorder verbundenen Rechner durchgeführt, in dem für jeden Bildpunkt des Compound-Bildes ein Bildsignal erzeugt wird, das dem Mittelwert von entsprechenden Bildsignalen der mit den einzelnen Sektor-Scans erzeugten Bilder entspricht. Die mit dem Rechner erzeugten Bildsignale für das Compound-Bild werden auch mit Hilfe des Video-Recorders gespeichert und nach Bedarf auf dem Bildschirm eines Fernsehmonitors dargestellt. Ein wesentlicher Nachteil dieses bekannten Verfahrens bzw. Systems ist, daß damit keine Echtzeitdarstellung des Compound-Bildes und deshalb auch keine Echtzeitdarstellung von Bewegungsabläufen möglich ist.

Die DE—A 31 24 655 beschreibt ein Verfahren und eine Einheit der im Oberbegriff des Anspruchs 1 bzw. des Anspruchs 2 angegebenen Art, das bzw. die in der Ultraschall-Bildverarbeitung zur Unterdrückung von Störungen verwendet wird, die statistisch verteilt, und z.B. durch Oszillationsvorgänge verursacht, bei der Erstellung von Bildern hoher Auflösung auftreten. Gemäß der DE—A 31 24 655 werden zuerst eine Vielzahl von Vorabbildern $V_1$, $V_2$, . . ., $V_n$ mittels bidimensionaler Abtastungen und mit unterschiedlichen Abtastparametern erstellt. Die Bildsignale jedes dieser Vorabbilder werden gefiltert. Durch diese Filterung werden Bildsignale für Zwischenbilder $Z_1$, $Z_2$, . . ., $Z_n$ erzeugt, die je einem der Vorabbilder entsprechen. Erst wenn die Bildsignale der Zwischenbilder $Z_1$ bis $Z_n$ vorhanden sind, werden diese Signale miteinander kombiniert, um Bildsignale für ein Kombinationsbild zu erzeugen. Nur so können die statistisch verteilten Störungen durch die Kombination der Bildsignale unterdrückt werden. Da die Kombination der Bildsignale der Zwischenbilder erst nach der Durchführung einer Anzahl von Abtastungen und der Speicherung und Filterung der dadurch gewonnenen Bildsignale vorgenommen wird, ist es mit dem Verfahren gemäß der DE—A 31 24 655 nicht möglich, das Kombinationsbild in Echtzeit darzustellen.

Die US—A 4,159,462 beschreibt ein Ultraschall-Abbildungssystem, mit dem eine Vielzahl von aufeinanderfolgenden, sich teilweise überdeckenden Sektor-Scans eines Körpers nach dem Impulsechoverfahren und in einer Abtastebene durchführbar sind, um Bildsignale in digitaler Form zu erzeugen, die den empfangenen Echos entsprechen. Bildsignale, die mit einer Vielzahl von aufeinanderfolgenden Sektor-Scans gewonnen werden, werden in einem einzigen digitalen Speicher gespeichert. Wenn für einen Bildpunkt (Pixel) mehrere Bildsignale vorhanden sind, wird nur ein Signal gespeichert, z.B. das stärkste Signal. Nach Speicherung der Bildsignale für mehrere solche Sektor-Scans werden die gespeicherten Signale gelesen und einer Anzeigevorrichtung, z.B. einem Speicheroszilloskop, zugeführt, um die Vielzahl der abgebildeten Sektoren anzuzeigen. Da die gespeicherten Bildsignale erst nach der Durchführung einer Anzahl von Abtastungen gelesen werden, ist es auch mit dem Ultraschall-Abbildungssystem gemäß der US—A 4,159,462 nicht möglich, das zusammengesetzte Bild in Echtzeit darzustellen.

Der Erfindung liegt die Aufgabe zugrunde, ein Verfahren der im Gattungsbegriff des Patentanspruchs 1 genannten Art, eine Bildsignal-Verarbeitungseinheit nach dem Gattungsbegriff des Patentanspruchs 2 sowie ein Ultraschall-Abbildungssystem zu schaffen, durch die eine Echtzeitdarstellung von zusammengesetzten Ultraschall-Querschnittbildern mit guter Bildqualität ermöglicht wird.

Gelöst wird diese Aufgabe für das Verfahren zum Erzeugen eines zusammengesetzten Ultraschall-Querschnittbildes eines Körpers durch die Merkmale im Kennzeichen des Patentanspruchs 1, für die Bildsignal-Verarbeitungseinheit für ein Ultraschall-Abbildungssystem durch die Merkmale des Kennzeichens des Patentanspruchs 2 und für das Ultraschall-Abbildungssystem durch Patentanspruch 9.

Zweckmäßige Ausgestaltungen der Bildsignal-Verarbeitungseinheit sind in den Unteransprüchen 2 bis 8 gekennzeichnet.

Die mit den beanspruchten Gegenständen erzielte technische Wirkung liegt im wesentlichen darin, daß damit Bildsignale, die in einem Ultraschall-Abbildungsverfahren durch eine Vielzahl von aufeinanderfolgenden, sich teilweise überdeckenden zweidimensionalen Abtastungen fortlaufend gewonnen und gespeichert werden, unmittelbar nach ihrer Speicherung miteinander kombiniert werden, um einen neuen Satz von Bildsignalen zur Erstellung eines Compound-Bildes zu bilden, und daß die Bildsignale dieses neuen Satzes unmittelbar nach ihrer Erzeugung einem Fernsehmonitor zugeführt werden. Auf diese Weise ermöglicht der Erfindungsgegenstand eine Echtzeitdarstellung von zusammengesetzten Ultraschall-Querschnittbildern und dadurch eine Echtzeitdarstellung von Bewegungsabläufen mit guter Bildqualität.

Die Merkmale und Vorteile der Erfindung gehen aus der folgenden, anhand der beiliegenden Zeichnungen vorgenommenen Beschreibung von Ausführungsbeispielen hervor. Es zeigen

Fig. 1 ein Blockdiagramm eines Ultraschall-Abbildungssystems, das eine erfindungsgemässe Bildsignalaufbereitungseinheit 17 enthält,

Fig. 2 und 3 zwei Ausführungsformen der Ultraschall-Wandleranordnung 114 in Fig. 1,

Fig. 4 ein Blockdiagramm der erfindungsgemässen Bildsignalaufbereitungseinheit 17 in Fig. 1,

Fig. 5 ein Blockdiagramm des Eingangspufferspeichers 31 in Fig. 4,

Fig. 6 ein Blockdiagramm des Hauptspeichers 34 und der Anordnung 35 von Ausgangspufferspeicher 351—358 in Fig. 4,

Fig. 7 ein Blockdiagramm des Ausgangspufferspeichers 351 der Anordnung 35 in Fig. 6,

Fig. 8 ein Blockdiagramm der Anordnung 35 von Ausgangspufferspeichern 351—358 und der Auswerteeinrichtung 36 in Fig. 4,

Fig. 9 Abtastungen mit verschiedenen Richtungswinkeln,

Fig. 10 eine Abtastung mit mehreren Ultraschall-Strahlen in einem bestimmten Richtungswinkel α,

Fig. 11 und 12 zwei mögliche Anordnungen der für die Speicherung der Bildsignalen benutzten Speicherstellen der Speichereinheiten 341—348 in Fig. 4,

Fig. 13 eine schematische Darstellung eines mit einer Abtastung auf dem Bildschirm eines Fernsehmonitors erzeugbaren Bildes,

Fig. 14 Abtastbereiche, die mit 8 verschiedenen Richtungswinkeln abgetastet werden,

Fig. 15 die Speichereinheiten 341—348 in Fig. 4, in denen die Bildsignale aus den Abtastbereichen 131—138 (in Fig. 14) gespeichert werden,

Fig. 16 eine schematische Darstellung von 8 Fernsehbildern, die je ein Bild eines der in Fig. 14 gezeigten Abtastbereiche 131—138 darstellen,

Fig. 17 ein Zeitdiagramm der Schreib- bzw. Lesevorgänge in den bzw. aus dem Eingangspufferspeicher 31 in Fig. 4,

Fig. 18 ein Zeitdiagramm der Schreib- bzw. Lesevorgänge in einem bzw. aus einem der Ausgangspufferspeicher 351—358 in Fig. 4,

Fig. 19 ein Zeitdiagramm der Signalverarbeitung in der Auswerteeinheit 36 in Fig. 4 und 8,

Fig. 20 eine schematische Darstellung von vier mit der Wandleranordnung 114 in Fig. 1—3 durchgeführten Sektor-Scans.

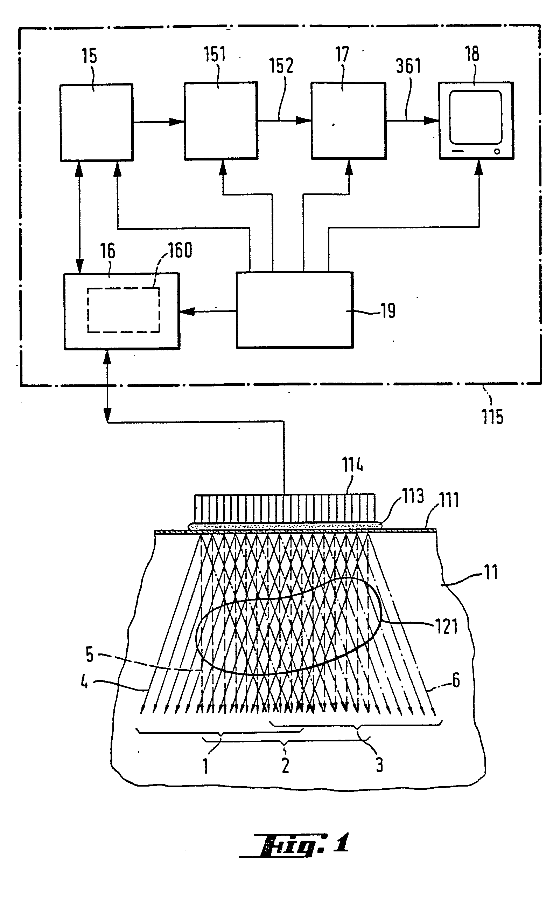

In Fig. 1 ist ein Ultraschall-Abbildungssystem zur Durchführung des erfindungsgemässen Verfahrens schematisch durch ein Blockdiagramm dargestellt. Dieses System enthält eine Ultraschall-Wandleranordnung 114 und eine Signalverarbeitungseinheit 115.

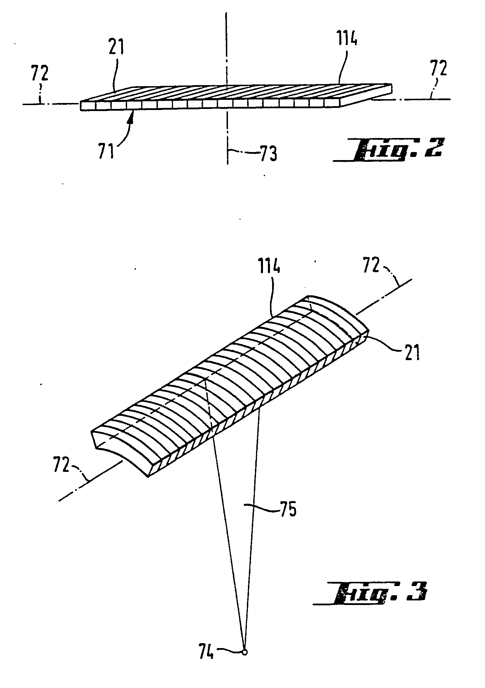

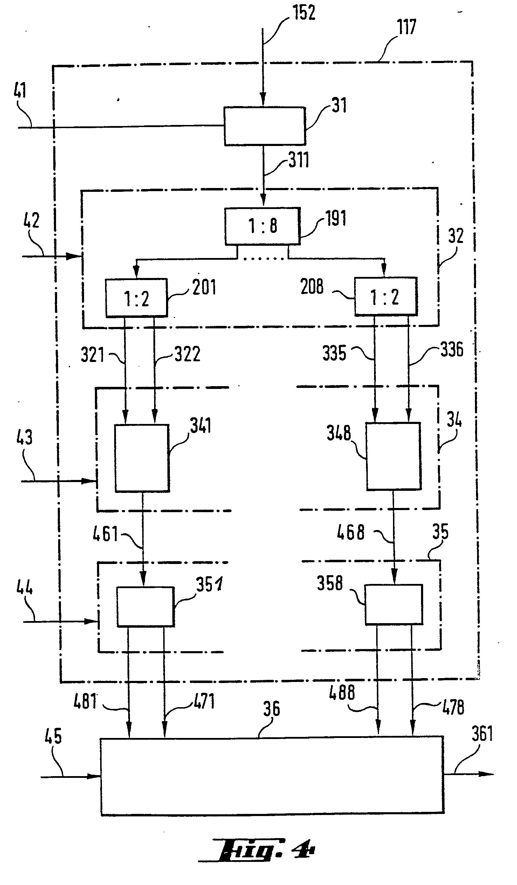

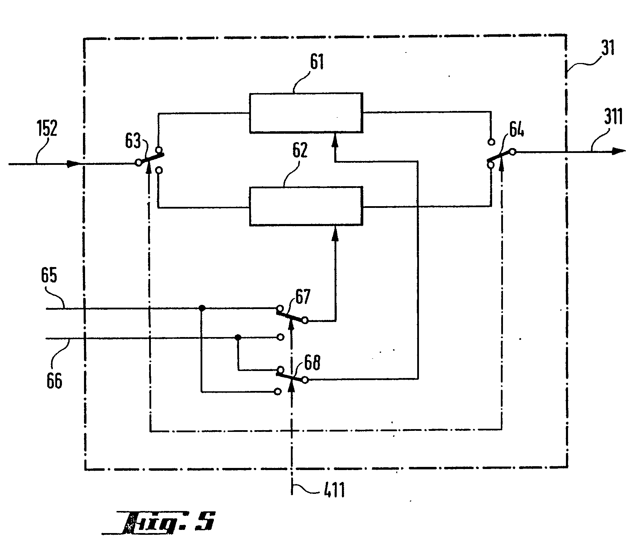

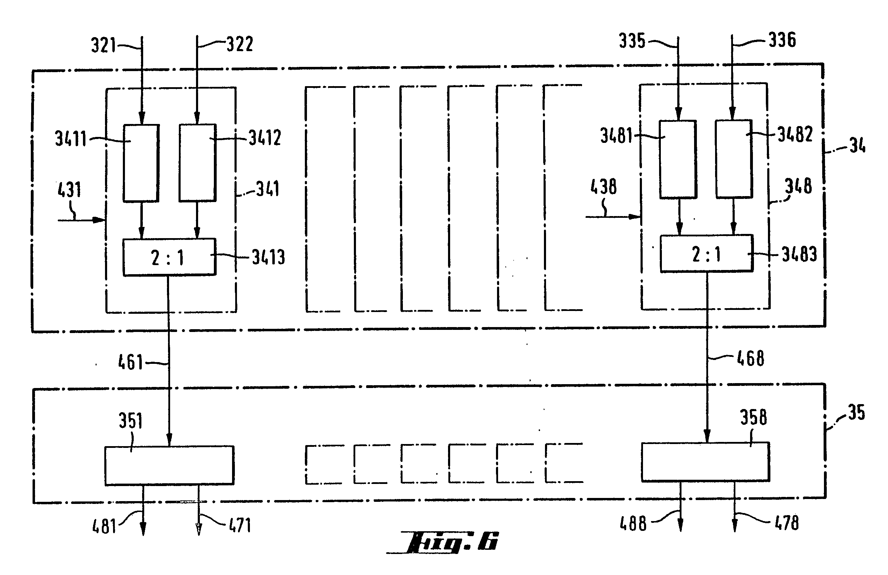

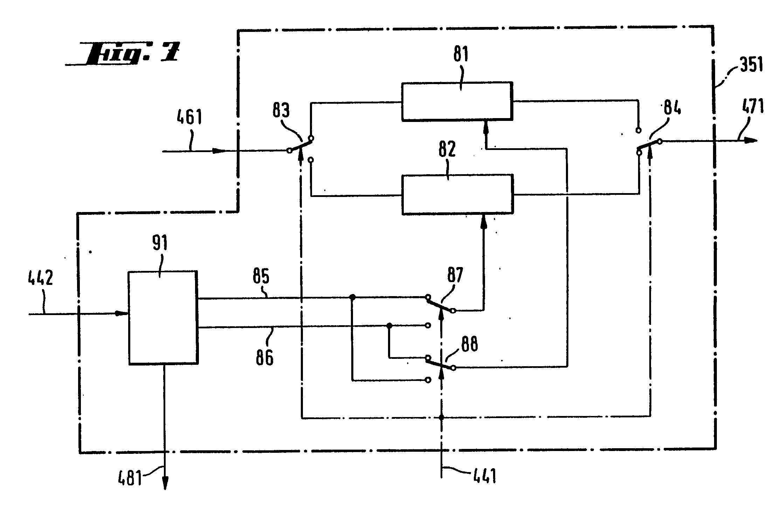

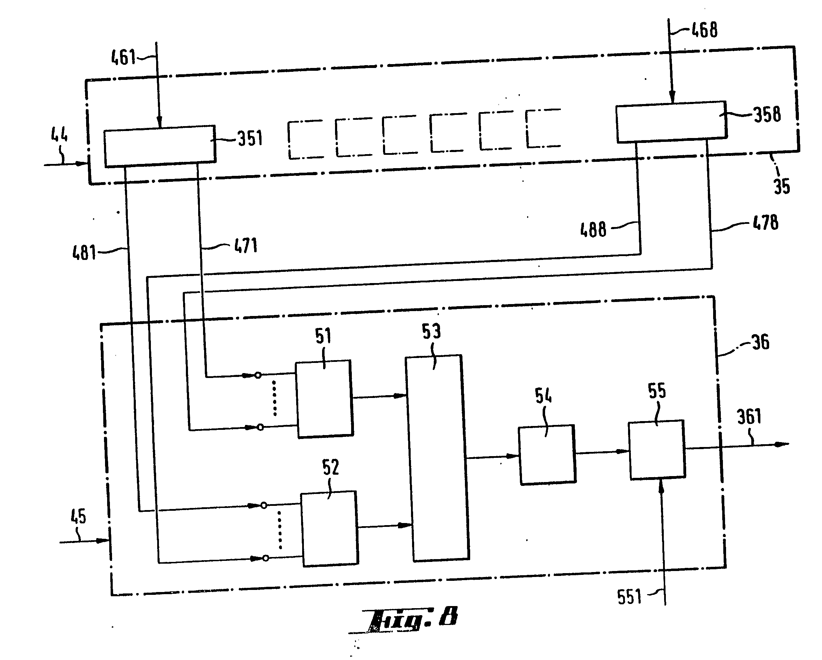

Wie in den Fig. 2 und 3 dargestellt, enthält die Wandleranordnung 114 eine längliche Anordnung von aneinander angrenzenden Wandlerelementen 21. Die Abstrahlfläche 71 der Wandleranordnung 114 hat eine Symmetrieachse 72, die parallel zur Längsachse der Wandleranordnung verläuft. In der Fig. 2 ist ferner eine Achse 73 gezeigt, die senkrecht zur und durch den Mittelpunkt der Abstrahlfläche 71 verläuft. Die Achsen 72 und 73 definieren die sogenannte Abtastebene, die mit der Wandleranordnung 114 abgetastet wird. Wie in Fig. 2 gezeigt, kann die Wandleranordnung 114 eine ebene Abstrahlfläche 71 haben. In der bevorzugten Ausführungsform, die in Fig. 3 gezeigt wird, hat die Abstrahlfläche 71 eine gewisse Krümmung, die eine Fokussierung der Ultraschallwellen in einer zur Abtastebene senkrechten Ebene bewirkt. Dies wird in Fig. 3 durch eine schematische Darstellung eines Ultraschall-Strahls 75 gezeigt, der annähernd in einem Brennpunkt 74 fokussiert wird.

Die in Fig. 1 dargestellte Signalverarbeitungseinheit 115 enthält eine Sender-Empfänger-Vorrichtung 15, einen Analog-Digital-Umsetzer 151, eine Wandler-Anschlussvorrichtung 16, eine Bildsignalaufbereitungseinheit 17, einen Fernsehmonitor 18 und eine zentrale Steuereinheit 19.

Da das Ultraschall-Abbildungssystem gemäss Fig. 1 mit einer segmentierten Wandleranordnung 114 arbeitet, deren Wandlerelemente gruppenweise angesteuert werden, um mehrere Scans mit verschiedenen Richtungswinkeln durchzuführen, enthält die Wandler-Anschlussvorrichtung 16 eine Elemente-Auswahlvorrichtung 160, mit der die Wandlerelemente der Wandleranordnung 114 wahlweise mit entsprechenden Anschlüssen der Sender-Empfänger-Vorrichtung verbunden werden.

Der Analog-Digital-Umsetzer 151 digitalisiert die mit der Sender-Empfänger-Vorrichtung empfangenen Echosignale.

Die digitalisierten Echosignale werden der Bildsignalaufbereitungseinheit 17 über eine Leitung 152 zugeführt. Die Bildsignale am Ausgang der Einheit 17 werden dem Fernsehmonitor 18 über eine Leitung 361 zugeführt.

Im unteren Teil der Fig. 1 ist die Verwendung des dort gezeigten Abbildungssystem bei der Untersuchung eines Körperteils 11 eines Patienten schematische dargestellt. Wie in dieser Figur gezeigt, wird die Wandleranordnung 114 auf die Haut 111 des zu untersuchenden Körperteils 11 aufgesetzt, wobei ein Uebertragungsgel 113 zwischen der Abstrahlfläche der Wandlereinrichtung und die Haut des Patienten gebracht wird.

Das in Fig. 1 gezeigte Abbildungssystem wird so betrieben, dass mit der Wandleranordnung 114 wenigstens zwei verschiedene, sich teilweise überdeckende Abtastungen in der Abtastebene nach dem Impulsechoverfahren durchgeführt werden, um ein zusammengesetztes Querschnittbild, z.B. von einem internen Organ 121, zu erzeugen. Dabei werden z.B. drei solcher Abtastungen 1, 2, 3 in rascher Folge nacheinander durchgeführt. Bei jeder dieser Abtastungen werden in rascher Folge Gruppen von Wandlerelementen der Wandleranordnung 114 verwendet, die Ultraschallimpulse in einer bestimmten Richtung senden und die entsprechenden Echos empfangen. Auf diese Weise wird der untersuchte Körperteil bei jeder der Abtastungen 1, 2 bzw. 3 mit einer raschen Folge von zueinander parallelen Ultraschallstrahlen bestrahlt. In der Fig. 1 sind für jede der Abtastungen 1, 2, 3 die entsprechenden Strahlen (hier auch Abtastlinien genannt) 4, 5 bzw. 6 mit verschiedenenen Linien dargestellt. Durch das soeben beschriebene Verfahren wird der untersuchte Körperteil mit dem in Fig. 1 gezeigten, zusammengesetzten Abtastmuster in sehr kurzer Zeit bestrahlt.

In der Sender-Empfänger-Vorrichtung 15 werden die Sendesignale für die Wandlerelemente der Wandleranordnung 114 erzeugt, und die von den Wandlerelementen gelieferten Echosignale empfangen. Die Echosignale werden am Ausgang des Analog-Digital-Umsetzers 151 in digitaler Form über die Leitung 152 geliefert. Auf die Einzelheiten der Konstruktion und der Funktion der Sender-Empfänger-Vorrichtung 15 wird in der vorliegenden Beschreibung nicht eingegangen. Bei dem hier anhand der Fig. 1—19 beschriebenen Ausführungsbeispiel wird vorzugsweise die Sender-Empfänger-Vorrichtung 15 verwendet, die in der europäischen Patentanmeldung Nr. 84 115 893.4 mit dem Titel "Sender-Empfänger-Vorrichtung für ein Ultraschall-Bildgerät" beschrieben ist und als EP—A—0 150 452 am 7.8.85 veröffentlicht ist.

Zwischen der Sender-Empfänger-Vorrichtung 15 und der Wandleranordnung 114 ist die Elemente-Auswahlvorrichtung 160 eingeschaltet, die dazu dient, verschiedene Gruppen von aneinander angrenzenden Wandlerelementen der Wandleranordnung nacheinander auszuwählen und die Elemente jeder ausgewählten Gruppe von Wandlerelementen mit der Sender-Empfänger-Vorrichtung elektrisch zu verbinden.

Durch die verschiedenen, in Fig. 1 gezeigten Abtastungen 1, 2 bzw. 3 werden Einzelbilder aufgenommen. Die nachstehend im Detail beschriebene Bildsignalaufbereitungseinheit 17 dient dazu, ein elektronisches Compounding, d.h. eine Zusammensetzung dieser Einzelbilder durchzuführen, um ein zusammengesetztes Bild zu erzeugen, das Compound-Bild genannt wird. Hierfür enthält die Einheit 17 Mittel zur Speicherung und Assoziation der von der Sender-Empfänger-Vorrichtung abgegebenen Bildsignale und Mittel, die eine Übertragung der so erzeugten, dem Compound-Bild entsprechenden Bildsignale auf den Fernsehmonitor 18 ermöglichen.

Mit dem Fernsehmonitor 18 wird ein Bild angezeigt, das durch die oben erwähnte, elektronische Zusammensetzung von Einzelbildern erzeugt wird.

Die Steuereinheit 19 enthält die notwendigen Mittel zur Steuerung der Funktion der Wandler-Anschlussvorrichtung 16, der darin enthaltenden Elemente-Auswahlvorrichtung 160, der Sender-Empfänger-Vorrichtung 15, der Bildsignalaufbereitungseinheit 17 und des Fernsehmonitors 18.

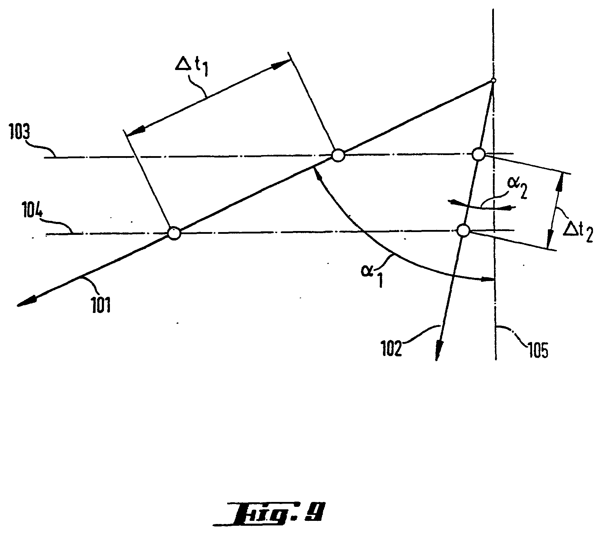

Fig. 4 zeigt ein Blockdiagramm der erfindungsgemässen Bildsignalaufbereitungseinheit 17 in Fig. 1. Diese Einheit enthält einen digitalen Bildsignalspeicher 117 und eine Auswerteeinrichtung 36.

Der Bildsignalspeicher 117 enthält einen Eingangspufferspeicher 31, einen Demultiplexer 32, einen Hauptspeicher 34, der 8 Speichereinheiten 341—348 enthält, und eine Anordnung 35 von 8 Ausgangspufferspeichern 351—358, wobei jeder der Speichereinheiten 341—348 einer der Pufferspeicher 351—358 zugeordnet ist. Der Demultiplexer 32 enthält einen Demultiplexer 191 mit einem Demultiplexer-Verhältnis von 1:8 und 8 Demultiplexer 201—208, die ein Demultiplex-Verhältnis von 1:2 haben und dem Demultiplexer 191 nachgeschaltet sind.

Die Mittel zur Erzeugung der Speicheradressen für die Schreib- und Lesevorgänge im Hauptspeicher 34 sind in der Steuereinheit 19 enthalten.

Der Eingang des Eingangspufferspeichers 31 ist über die Leitung 152 mit dem Ausgang des Analog-Digital-Umsetzers 151 in Fig. 1 verbunden. Der Eingang des Demultiplexers 32 ist über eine Leitung 311 mit dem Ausgang des Eingangspufferspeichers 31 verbunden. Die Ausgänge des Demultiplexers 32 sind über 16 Leitungen 321—336 mit entsprechenden Eingängen der Speichereinheiten 341—348 verbunden. Die Ausgänge der Pufferspeicher 351—358 sind über Leitungen 471—478 und 481—488 mit entsprechenden Eingängen der Auswerteeinheit 36 verbunden. Der Ausgang dieser Einheit ist über die Leitung 361 mit dem Eingang des Fernsehmonitors 18 in Fig. 1 verbunden. Steuersignale, die von der Steuereinheit 19 abgegeben werden, werden den Schaltungen in Fig. 4 über Leitungen 41—45 zugeführt.

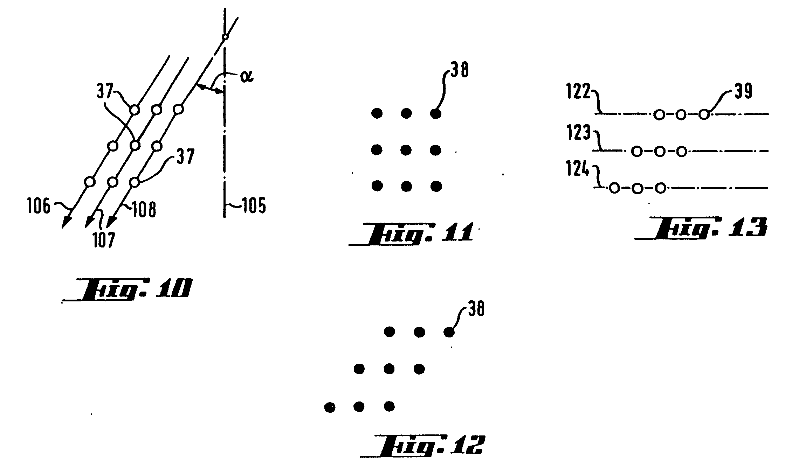

Fig. 5 zeigt ein Blockdiagramm des Eingangspufferspeichers 31 in Fig. 4. Dieser Pufferspeicher enthält zwei identische Speichereinheiten 61, 62, die je eine Speicherkapazität von 512×6 Bit haben. Jede dieser Speichereinheiten dient dazu, sämtliche Bildsignale zu speichern, die einer Abtastlinie, z.B. Abtastlinie 4 in Fig. 1, entsprechen. Schalter 63, 64 ermöglichen, innerhalb eines Zeitintervalls von 256 µs (Strahlenwiederholzeit) über die Leitung 152 ankommende Bildsignale (Amplitudenwerte) in einer der Speichereinheiten 61, 62 zu schreiben und gespeicherte Bildsignale der unmittelbar vorangehenden Abtastzeile in demselben Zeitintervall aus der anderen dieser Speichereinheiten zu lesen und diese über die Leitung 311 dem Demultiplexer 32 zuzuführen. Der Eingangspufferspeicher 31 erhält ein Taktsignal für die Steuerung des jeweiligen Schreibvorgangs über die Leitung 66 und ein Taktsignal für die Steuerung des Lesevorgangs über die Leitung 65. Diese Taktpulse werden den Speichereinheiten 61, 62 über Schalter 67, 68 zugeführt. Wenn der Lesevorgang aus einer der Speichereinheiten 61, 62 beendet ist, werden die Schalter 63, 64, 67, 68 gleichzeitig umgeschaltet. Diese Umschaltung wird jeweils durch die Steuereinheit 19 in Fig. 1 veranlasst. In Fig. 5 ist die entsprechende Steuerung durch eine Linie 411 dargestellt.

Fig. 6 zeigt ein Blockdiagramm des Hauptspeichers 34 und der Anordnung 35 von Ausgangspufferspeichern 351—358 in Fig. 4. Wie in der Fig. 6 schematisch dargestellt, ist jede der 8 Speichereinheiten 341—348 in Speicher-Unterebenen unterteilt. So ist z.B. die Speichereinheit 341 in zwei Unterebenen 3411 und 3412 unterteilt. Jede dieser Unterebenen hat eine Speicherkapazität von 64×256 Pixels. Jede der Speichereinheiten 341—348 hat also eine Speicherkapazität von 64×512 Pixels. Wie nachstehend in Detail beschrieben, werden in jeder der Speichereinheiten 341—348 sämtliche Bildsignale gespeichert, die mit einer aus einer Folge von 64 Abtastzeilen bestehenden Abtastung gewonnen werden. Eine fernsehkompatible Darstellung der mit jeder Abtastung gewonnenen Bildinformation würde beim vorliegenden Ausführungsbeispiel aus 512 Fernsehzeilen bestehen. Der Hauptspeicher 34 ist so organisiert, dass bei jeder Abtastung die Bildsignale für die geraden Zeilen des Fernsehbildes in der einen Unterebene einer der Speichereinheiten und die Bildsignale für die ungeraden Zeilen in der anderen Unterebene der selben Speichereinheit gespeichert werden. Jede der 8 Speichereinheiten 341—348 enthält einen der Multiplexer 3413—3483. Die in den Unterebenen der Speichereinheiten gespeicherten Bildsignale werden über diese Multiplexer und über die Leitungen 461—468 den Eingängen der Ausgangspufferspeicher 351—358 zugeführt.

Fig. 7 zeigt ein Blockdiagramm des Ausgangspufferspeichers 351 der Anordnung in Fig. 6. Alle 8 Ausgangspufferspeicher 351—358 haben den gleichen Aufbau. Der Ausgangspufferspeicher 351 enthält zwei identische Schieberegister 81, 82, die je eine Speicherkapazität von 64×6 Bit haben. In jedem dieser Schieberegister können die Bildsignale für eine ganze Zeile eines mit einer Abtastung erzeugten Fernsehbildes gespeichert werden. Schalter 83, 84 ermöglichen, die über die Leitung 461 vom Hauptspeicher 34 abgegebenen Bildsignale für eine Fernsehzeile in das eine der Schieberegister 81, 82 zu schreiben, während die in dem anderen Schieberegister für die vorangehende Fernsehzeile gespeicherten Bildsignale daraus gelesen und über den Schalter 84 und die Leitung 471 der Auswerteeinrichtung 36 zugeführt werden. Der Ausgangspufferspeicher 351 enthält ferner einen programmierbaren Taktpulsgenerator 91, der über eine Leitung 442 Steuersignale von der Steuereinheit 19 enthält und folgende Signale abgibt: "read enabling"-Impulse über die Leitung 481, ein Taktsignal zur Steuerung des Schreibvorgangs über eine Leitung 86 und ein Taktsignal zur Steuerung des Lesevorgangs über eine Leitung 85. Die über Leitungen 85, 86 abgegebenen Taktsignale werden den Schieberegistern 81, 82 über Schalter 87, 88 zugeführt. Wenn der Schreibvorgang in einem der Schieberegister 81, 82 beendet ist, werden die Schalter 83, 84, 87, 88 gleichzeitig umgeschaltet. Diese Umschaltung wird durch die Steuereinheit 19 veranlasst. In Fig. 7 ist die entsprechende Steuerung durch die Linie 441 dargestellt.

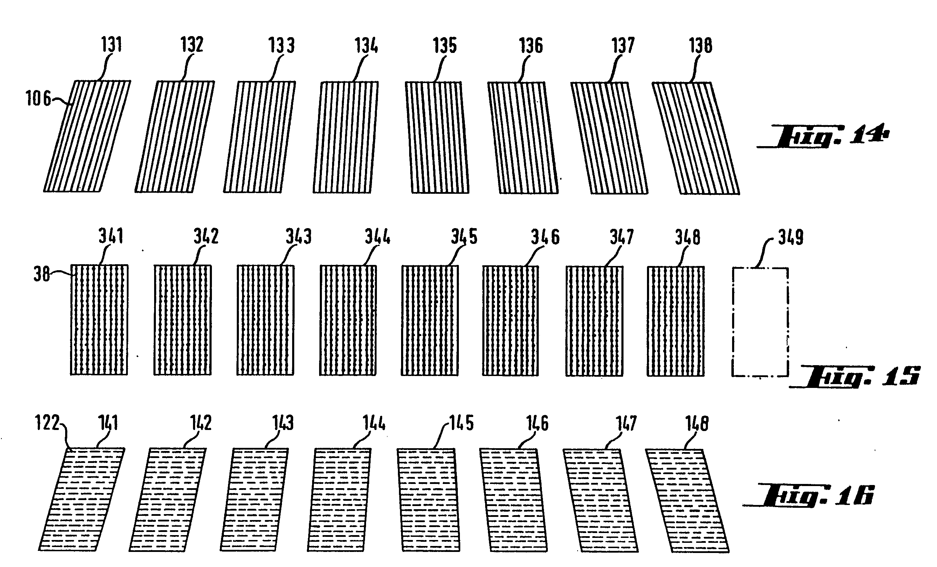

Fig. 8 zeigt ein Blockdiagramm der Anordnung 35 von Ausgangspufferspeichern 351—358 und der Auswerteeinrichtung 36 in Fig. 4. Die Auswerteeinrichtung 36 enthält 2 Addierschaltungen 51, 52, eine Quotientbildungsschaltung 53, einen Digital-Analog-Umsetzer 54 und eine Mischschaltung 55. Bildsignale, die von den Ausgangspufferspeichern 351—358 über die Leitung 471—478 abgegeben werden, werden mit der Addierschaltung 51 addiert, und das entsprechende Summensignal wird einen ersten Eingang der Quotientbildungsschaltung 53 zugeführt. "Read enabling"-Impulse, die über die Leitungen 481—488 abgegeben werden, werden mit der Addierschaltung 52 addiert, und das entsprechende Summensignal wird einem zweiten Eingang der Quotientbildungsschaltung 53 zugeführt. Diese Schaltung bildet ein Ausgangssignal, das dem Quotient des Summensignals am Ausgang der Addierschaltung 51 durch das Summensignal am Ausgang der Addierschaltung 52 entspricht. Das Ausgangssignal der Quotientbildungsschaltung 53 wird durch den Digital-Analog-Umsetzer 54 in ein entsprechendes analoges Signal umgewandelt, das einem der Eingänge der Mischschaltung 55 zugeführt wird, wo sie mit einem über eine Leitung 551 einem zweiten Eingang der Mischschaltung 55 zugeführten Fernseh-Synchronisationssignal gemischt wird, um das Ausgangssignal der Auswerteeinrichtung 36 zu bilden, das über die Leitung 361 dem Fernsehmonitor 18 zugeführt wird.

In Fig. 9 sind zwei Ultraschall-Strahlen 101, 102, die in der Abtastebene mit einer zur Abstrahlfläche senkrechten Achse 105 verschiedene Winkel $\alpha_1$ bzw. $\alpha_2$ bilden, dargestellt. Diese Ultraschall-Strahlen erfassen abgetastete Stellen, die in Fig. 9 durch kleine Kreise dargestellt sind und die in Schichten 103 bzw. 104 enthalten sind, die senkrecht zur Achse 105 liegen. Wie in Fig. 9 dargestellt, erfasst der Strahl 101 zuerst die abgetastete Stelle in der Schicht 103 und nach einem

Zeitintervall $\Delta t_1$ die abgetastete Stelle in der Schicht 104. In ähnlicher Weise erfasst der Strahl 102 zuerst die abgetastete Stelle in der Schicht 103 und nach einem Intervall $\Delta t_2$ die abgetastete Stelle in der Schicht 104. Es ist aus Fig. 9 ersichtlich, dass die Grösse der Zeitintervalle $\Delta t_1$ bzw. $\Delta t_2$ vom Winkel abhängig ist, den der Ultraschall-Strahl 101 bzw. 102 mit der Achse 105 bildet. Da eine Darstellung des Querschnittbildes auf dem Bildschirm des Fernsehmonitors 18 beabsichtigt ist, wobei abgetastete Stellen nur entlang der Fernsehzeilen dargestellt werden können, ist für eine treue Wiedergabe der geometrischen Anordnung der abgetasteten Stellen im abgetasteten Bereich des untersuchten Körpers erforderlich, mit einer winkelabhängigen Abtastfrequenz zu arbeiten.

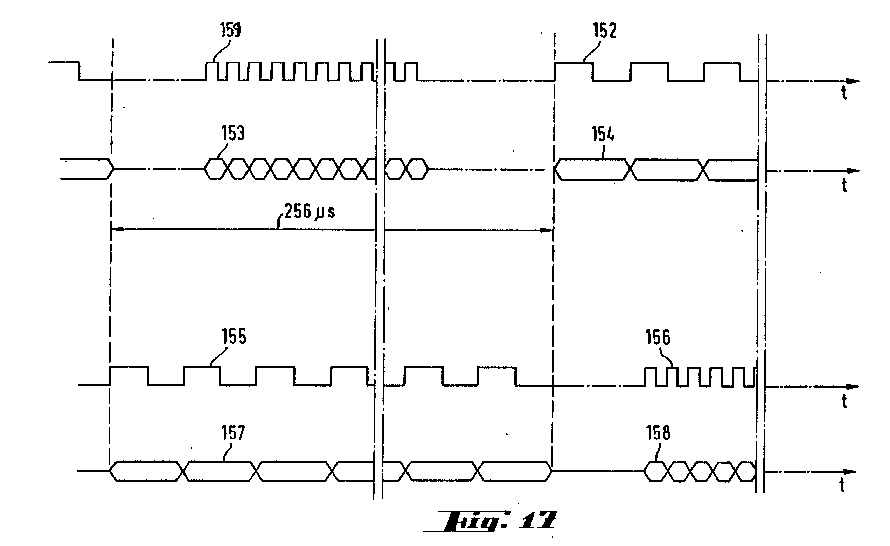

Anhand der Fig. 10—13 werden nun zwei Möglichkeiten bei der Speicherung der Bildsignale im Hauptspeicher 34 erläutert. In Fig. 10 ist die Abtastung eines untersuchten Körpers mit einem bestimmten Richtungswinkel $\alpha$ dargestellt. Dabei werden eine Anzahl abgetasteter Stellen 37 durch Ultraschall-Strahlen 106—108 erfasst. Die auf diese Weise erzeugten Bildsignale, die den abgetasteten Stellen 37 entsprechen, werden dann digitalisiert und in einer der Speichereinheiten des Hauptspeichers 34 gespeichert. Wie in der Fig. 11 schematisch gezeigt, können dabei die Bildsignale in Speicherstellen 38 gespeichert werden, deren geometrische Anordnung von derjenigen der abgetasteten Stellen 37 in Fig. 10 abweicht und davon unabhängig ist. In diesem Fall muss das Abbildungssystem so eingerichtet sein, dass die Bildsignale von der Speichereinheit zur Auswerteeinrichtung 36 in einer solchen zeitlichen Anordnung übertragen werden, dass das zusammengestezte, gemäss Fig. 13 auf dem Bildschirm dargestellte Querschnittbild die geometrische Anordnung der Reflektoren treu wiedergibt. In Fig. 13 sind Fernsehzeilen 122—124 und darauf liegende Bildpunkte 39 dargestellt, die je einer abgetasteten Stelle 37 in Fig. 10 entsprechen.

Eine andere Möglichkeit bei der Speicherung der Bildsignale in einer der Speichereinheiten des Hauptspeichers 34 ist in Fig. 12 dargestellt. Es ist aus dieser Figur ersichtlich, dass dabei die Bildsignale in Speicherstellen 38 gespeichert werden, deren geometrische Anordnung der Anordnung der abgetasteten Stellen 37 in Fig. 10 entspricht. In diesem Fall ist bei der Uebertragung der Bildsignale vom Hauptspeicher 34 zur Auswerteeinheit 36 keine Formatänderung erforderlich, damit das auf dem Bildschirm des Fernsehmonitors 18 dargestellte zusammengesetzte Querschnittbild die geometrische Anordnung der abgetasteten Stellen 37 treu wiedergibt.

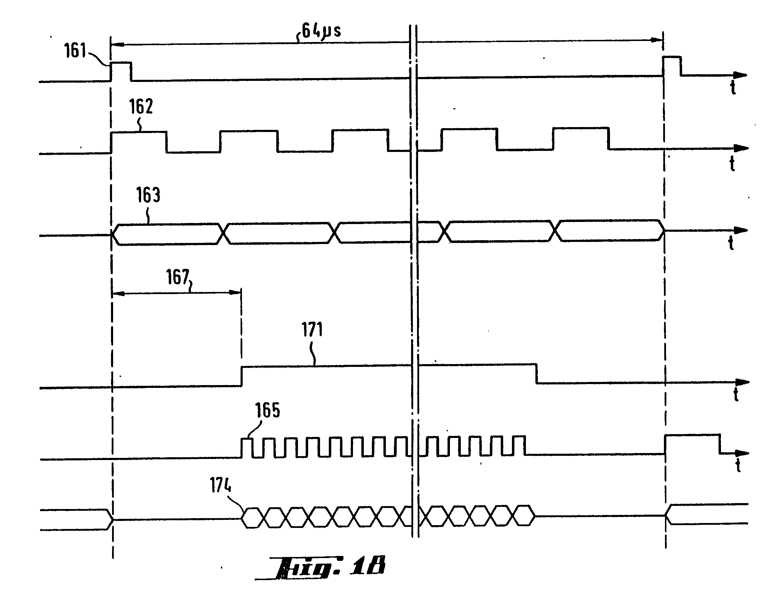

Im unteren Teil der Fig. 1 ist schematisch dargestellt, dass mit dem hier beschriebenen Ultraschall-Abbildungssystem der untersuchte Körperteil mit einem zusammengesetzten Abtastmuster abgetastet wird, der sich aus mehreren aufeinanderfolgenden linearen Abtastungen 1, 2, 3 mit verschiedenen Richtungswinkeln zusammensetzt. Wie in der Fig. 14 schematisch dargestellt, wird bei den hier beschriebenen Ausführungsbeispielen vorzugsweise in Abtastmuster verwendet, das sich aus 8 solcher linearen Abtastungen 131—138 zusammensetzt. Bei allen diesen Abtastungen hat der Wandler 114 dieselbe Position in Bezug auf den untersuchten Körperteil. Die Abtastungen 131—138 sollten daher eigentlich—wie in der Fig. 1—übereinander dargestellt werden. Damit die unterschiedlichen Richtungswinkel der Ultraschall-Strahlen 106 dieser Abtastungen leicht erkannt werden, sind aber in der Fig. 14 die Abtastungen 131—138 nebeneinander dargestellt. Jede dieser Abtastungen wird durch Bestrahlung des untersuchten Körperteils mit Ultraschall-Impulsen, die entlang 64 zueinander parallelen Strahlen (hier auch Abtastlinien genannt) gesendet werden, erzeugt. Die Strahlwiederholungszeit, d.h. der zeitliche Abstand zwischen dem Senden von aufeinanderfolgenden Ultraschallimpulsen beträgt 256 µs. Wie oben bereits erwähnt, wird die Abtastfrequenz so gewählt, dass für jede Abtastlinie Bildsignale für 512 Pixels gewonnen werden.

Wie anhand der Fig. 14 und 15 dargestellt, ist bei einem Ausführungsbeispiel der Erfindung vorgesehen, zur Speicherung der Bildsignale, die mit jeder der Abtastungen 131—138 gewonnen werden, eine der Speichereinheiten 341—348 des Hauptspeichers 34 in Fig. 4 zu verwenden. Dieses Speichereinheiten sind in Fig. 15 dargestellt. Es ist aus Fig. 14 und 15 ersichtlich, dass beim soeben erwähnten Ausführungsbeispiel die Zahl der Abtastungen 131—138 und die Zahl der Speichereinheiten 341—348 gleich sind. In einer zweiten Ausführungsform der Erfindung kann jedoch die Zahl der Speichereinheiten, in die der Hauptspeicher 34 unterteilt ist, grösser als die Zahl der mit dem Abbildungssystem zu der Erzeugung eines zusammengesetzten Querschnittbildes durchgeführten Abtastungen sein. Wie in der Fig. 15 dargestellt, kann z.B. der Hauptspeicher eine zusätzliche Speichereinheit 349 enthalten.

Wie oben anhand der Fig. 10—13 bereits erläutert, können in jeder Speichereinheit die Bildsignale in einer Anordnung von Speicherstellen gespeichert werden, deren geometrische Anordnung von der Anordnung der abgetasteten Stellen abweicht und davon unabhängig ist, oder in einer Anordnung von Speicherstellen gespeichert werden, deren geometrische Anordnung der Anordnung der abgetasteten Stellen entspricht.

Fig. 16 zeigt eine schematische Darstellung von 8 Fernsehbildern 141—148, die je ein Bild eines der in Fig. 14 gezeigten Abtastbereiche 131—138 darstellen. Die Bilder 141—148 setzen sich aus Fernsehzeilen zusammen, wobei jede Zeile Bildpunkte darstellt, die in digitaler Form in einer Zeile von Speicherstellen 38 in einer der Speichereinheiten 341—348 (in Fig. 15) gespeichert ist. Es wird jedoch darauf hingewiesen, dass die Darstellung einzelner Fernsehbilder 141—148 gemäss Fig. 16 nicht im Vordergrund steht. In der vorliegenden Beschreibung dient eine solche Darstellung lediglich zur Erläuterung der Korrespondenz zwischen Bildpunkten des Fernsehbildes, Speicherstellen im Hauptspeicher 34 und den abgetasteten Stellen.

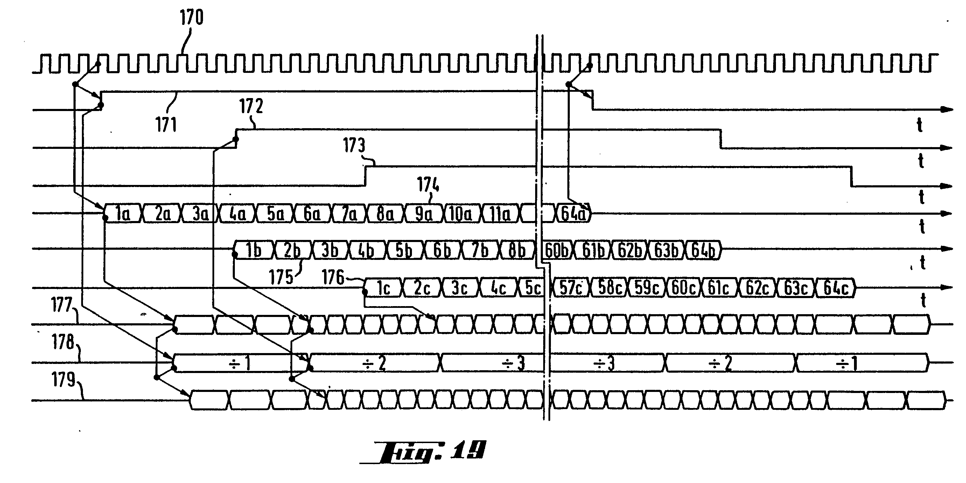

Bezugnehmend auf die Fig. 5 und 17 werden nun die Schreib- und Lesevorgänge im Eingangspufferspeicher 31 beschrieben. Mit der in Fig. 5 gezeigten Stellung der Schalter, werden z.B. innerhalb von 256 μs (Strahlwiederholzeit) 512 digitalisierte Amplitudenwerte 153 in die Speichereinheit 61 mit einer winkelabhängigen Datenrate geschrieben, die grösser als 2 MHz ist. Das für diesen Schreibvorgang erforderliche Taktsignal 159 wird der Speichereinheit 61 über die Leitung 66 und den Schalter 68 zugeführt. Auf diese Weise werden 512 Bildsignale pro Abtastlinie im Eingangspufferspeicher 31 gespeichert. Wie aus dem unteren Teil der Fig. 17 ersichtlich, werden im selben Zeitintervall von 256 μs 512 Amplitudenwerte 157, die im vorangehenden Intervall von 256 μs gespeichert wurden, aus der Speichereinheit 62 mit einer fixen Datenrate, von z.B. 2 MHz gelesen. Das dafür erforderliche Taktsignal 155 wird der Speichereinheit 62 über die Leitung 65 und den Schalter 67 zugeführt. Am Ende von jedem Intervall von 256 μs werden alle Schalter in Fig. 5 umgeschaltet. Wie aus Fig. 17 ersichtlich, bewirkt das Taktsignal 156 im nächsten Intervall von 256 μs das Schreiben von 512 neuen Amplitudenwerten 158 in die Speichereinheit 62, während das Taktsignal 152 das Lesen der im vorangehenden Zeitintervall von 256 μs in die Speichereinheit 61 geschriebenen Amplitudenwerte 154 bewirkt. Die Taktsignale 151 und 156 haben die gleiche Frequenz und die gleiche zeitliche Lage innerhalb des Zeitintervalls von 256 μs. Die Taktsignale 155 und 152 haben die gleiche Frequenz und die gleiche zeitliche Lage innerhalb des jeweiligen Intervalls von 256 μs.

Gemäss dem Vorstehenden wird also die Datenrate der 512 digitalisierten Bildsignale (Amplitudenwerte) pro Abtastlinie mit Hilfe des Eingangspufferspeichers 31 transformiert, um das Schreiben dieser Bildsignale in den Hauptspeicher 34 mit einer fixen Speichersteuerung zu synchronisieren.

Bezugnehmend auf Fig. 4—6 werden nun die Schreib- und Lesevorgänge in die Speichereinheiten 341—348 des Hauptspeichers 34 in Fig. 4 beschrieben. Die aus einer der Speichereinheiten 61, 62 des Eingang-Pufferspeichers 31 gelesenen Bildsignale für eine ganze Abtastlinie (z.B. für die Abtastlinie 106 in Fig. 14) werden über die Leitung 311 dem Eingang des Demultiplexers 32 mit einer Datenrate von 2 MHz zugeführt. Im Ansprechen auf Steuersignale, die ihm über die Leitung 42 zugeführt werden, leitet der Demultiplexer 32 die an seinem Eingang ankommenden Bildsignale zu einer der Speichereinheiten 341—348 des Hauptspeichers 34 weiter. Dabei werden jeweils die über die Leitung 311 mit einer Datenrate von 2 MHz ankommenden Bildsignale in zwei Folgen von Bildsignalen mit einer Datenrate von je 1 MHz aufgeteilt. Wenn der Demultiplexer 32 die Bildsignale der Speichereinheit 341 abgibt, wird eine der Folgen von Bildsignalen über die Leitung 321 zur Speicher-Unterebene 3411 (in Fig. 6) weitergeleitet, während die andere Folge von Bildsignalen gleichzeitig über Leitung 322 zur Speicher-Unterebene 3412 weitergeleitet wird. In der Unterebene 3411 werden Bildsignale für Bildpunkte geschrieben, die bei der Erzeugung von geraden Fernsehzeilen des zusammengesetzten Querschnittsbild berücksichtigt werden. In der Unterebene 3412 werden Bildsignale für Bildpunkte geschrieben, die bei der Erzeugung von ungeraden Fernsehzeilen des zusammengesetzten Querschnittbildes berücksichtigt werden. Auf diese Weise werden die Bildsignale, die mit jeder Abtastlinie der Abtastung 131 in Fig. 14 gewonnen werden, in eine entsprechende Spalte von Speicherstellen 38 der Speichereinheit 341 in Fig. 15 geschrieben. Nach dem gleichen Verfahren werden die Bildsignale, die mit den Abtastungen 132—138 gewonnen werden, jeweils in die zugeordnete Speichereinheit 342—348 geschrieben. Wegen der erwünschten fernsehkompatiblen Darstellung werden die in den Speichereinheiten 341—348 gespeicherten Bildsignale aus horizontalen Zeilen von Speicherstellen 38 gelesen, wobei je eine Zeile von Speicherstellen 38 der 8 Speicher-Unterebenen 3411—3481 gelesen werden. Auf diese Weise wird der Inhalt der Speicher-Unterebenen 3411—3481 zeilenweise gelesen. Wenn dieser Vorgang beendet ist, wird der Inhalt der 8 Speicher-Unterebenen 3412—3482 ebenfalls zeilenweise gelesen. Wenn dieser Vorgang beendet ist, wird erneut der Inhalt der 8 Speicher-Unterebenen 3411—3481 gelesen und so weiter.

Wenn die Zahl der im Hauptspeicher 34 verwendeten Speichereinheiten 341—348 und die Zahl der zur Erzeugung des zusammengesetzten Querschnittbildes durchgeführten Abtastungen 131—138 in Fig. 14 gleich sind, ist für die Schreib- und Lesevorgänge in die bzw. aus den Speichereinheiten 341—348 ein Speicherzyklus von 1 μs vorgesehen, der in zwei Zyklen von je 500 ns aufgeteilt ist. So werden in der ersten Hälfte eines Speicherzyklus ein Pixel $Y_U$ in die Speicher-Unterebene 3411 und ein Pixel $Y_G$ in die Speicher-Unterebene 3412 geschrieben, und in der zweiten Hälfte des selben Speicherzyklus wird gleichzeitig z.B. je ein Pixel $X_U$ aus den 8 Speicher-Unterebenen 3412—3482 gelesen. Wenn das auf dem Bildschirm des Fernsehmonitors 18 erzeugte Bild angehalten werden soll (Einfrieren des Bildes), werden die Schreibzyklen unterdrückt. Die entsprechende Zeitintervalle können dann für einen direkten Zugriff (Lesen oder Schreiben) durch einen Mikroprozessor verwendet werden. Dieser kann jeweils zu einem beliebigen Pixel in einer der Speichereinheiten zugreifen. Wenn das Bild nicht eingefroren wird, wird der Schreibzyklus dauernd verwendet, der Lesezyklus jedoch nur während der Erscheinungszeit des Compound-Bildes (auf dem Bildschirm des Fernsehmonitors 18) innerhalb des Zeitintervalls pro Fernsehbild. Die europäische Fernsehnorm beansprucht 625 Zeilen, davon werden 512 für ein Ultraschallbild benötigt. Eine Fernsehzeile wird innerhalb eines Zeitintervalls von 64 μs erzeugt.

Die aus den Speicher-Unterebenen der Speichereinheiten 341—348 gleichzeitig gelesenen Bildsignale gelangen über die Multiplexer 3413—3483 und über die Leitungen 461—468 zu den Ausgangspufferspeichern 351—358.

Bezugnehmend auf die Fig. 6—8 und 18 werden nun die Schreib- und Lesevorgänge im Ausgangspufferspeicher 351 beschrieben. Die Schreib- und Lesevorgänge werden in allen 8 Ausgangspufferspeichern 351—358 auf gleiche Weise und gleichzeitig durchgeführt.

Wenn sich die Schalter 83, 84, 87 und 88 in der in Fig. 7 gezeigten Position befinden, werden die Bildsignale, die aus einer Zeile von Speicherstellen einer der Speicher-Unterebenen 3411 oder 3412 in Fig. 6 gelesen werden, dem Schieberegister 81 über die Leitung 461 und den Schalter 83 zugeführt. Wie aus dem Zeitdiagramm in Fig. 18 ersichtlich, findet dieser Schreibvorgang innerhalb eines Intervalls von 64 μs statt, das durch zwei aufeinanderfolgende Synchronisationsimpulse 161 für die Fernsehzeilen definiert ist. Während diesem Intervall erhält das Schieberegister 81 über die Leitung 86 und den Schalter 88 ein Taktsignal 162, das den soeben erwähnten Schreibvorgang in das Schieberegister 81 steuert. Auf diese Weise werden 64 Bildsignale 163 in das Schieberegister 81 mit einer Datenrate von 1 MHz geschrieben. Wie nun anhand des Zeitdiagramms in Fig. 18 erläutert, wird innerhalb des selben Zeitintervalls—in dem Bildsignale in das Schieberegister 81 geschrieben werden—der Inhalt des Schieberegisters 82 (in Fig. 7) gelesen, in dem Bildsignale der vorangegangenen Zeile gespeichert sind. Dieser Lesevorgang erfolgt mit einer Datenrate von ungefähr 4 MHz und mit einer winkel- und zeilenabhängigen Verzögerung 167. Die Dauer dieses Lesevorgangs wird jeweils von einem Impuls 171 bestimmt, der zugleich als "read enabling"-Impuls verwendet wird. Das Lesen des Schieberegisters 82 wird durch ein Taktsignal 165 von ca. 4 MHz gesteuert, das dem Schieberegister 82 über die Leitung 85 und den Schalter 87 zugeführt wird. Auf diese Weise werden 64 Bildsignale 174 aus dem Schieberegister 82 gelesen und über den Schalter 84 und die Leitung 471 einem Eingang der Addierschaltung 51 der Auswerteeinrichtung 36 in Fig. 8 zugeführt. Durch den soeben beschriebenen Lesevorgang werden zwei wichtige Effekte erzielt. Einerseits wird durch die Datenrate des Lesevorgangs eine fernsehkompatible Verarbeitung der Bildsignale in der Auswerteeinrichtung 36 ermöglicht (mit einem Taktsignal von ca. 8 MHz). Andererseits wird durch die oben erwähnte, vom Richtungswinkel der Abtastlinien und von der relativen Position der jeweils entsprechenden Fernsehzeile abhängigen Verzögerung erreicht, dass das auf dem Bildschirm des Fernsehmonitors 18 darge-stellte Querschnittbild die geometrische Anord-nung der abgetasteten Reflektoren treu wiedergibt. Der Impuls 171, der die aktive Lesezeit aus dem Schieberegister 82 definiert, wird vom programmierbaren Taktpulsgenerator 91 über die Leitung 481 als "read enabling"-Impuls abgegeben. Am Ende von jedem Intervall von 64 μs

(siehe Fig. 18) werden alle Schalter in Fig. 7 umgeschaltet. Im darauf folgenden Intervall von 64 μs werden also Bildsignale in das Schieberegister 82 geschrieben und der Inhalt des Schieberegisters 81 gelesen.

Die oben erwähnte Verzögerung beim Lesevorgang aus dem Ausgang-Pufferspeicher 351 ist nicht erforderlich, wenn im Hauptspeicher die Bildsignale in Speicherstellen gespeichert werden, deren geometrische Anordnung der geometrischen Anordnung der abgetasteten Stellen entspricht.

Bezugnehmend auf Figuren 8 und 19 wird nun die Signalverarbeitung in der Auswerteeinrichtung 36 beschrieben. Die aus den 8 Ausgang-Pufferspeichern 351—358 gelesenen Bildsignale gelange über die Leitungen 471—478 zu entsprechenden Eingängen der Addierschaltung 51. Entsprechende, von den Ausgangs-Pufferspeichern 351—358 über die Leitungen 481—488 abgegebene "read enabling"-Impulse werden den Eingängen der Addierschaltung 52 zugeführt. Die auf diese Weise in den Addierschaltungen 51, 52 gebildeten Summensignale werden entsprechenden Eingängen der Quotientbildungsschaltung 53 zugeführt. Auf diese Weise wird am Ausgang der Quotientbildungsschaltung 53 für jeden Bildpunkt des auf dem Bildschirm des Fernsehmonitors 18 dargestellten zusammengesetzten Querschnittbildes ein Bildsignal (Amplitudenwert) erzeugt, dass dem arithmetischen Mittelwert von 1 bis 8 Bildsignalen entspricht. Das Ausgangssignal der Quotientbildungsschaltung wird mit dem Digital-Analog-Umsetzer 54 in ein analoges Signal umgewandelt, das einem der Eingänge der Mischschaltung 55 zugeführt wird, wo es mit dem über die Leitung 551 ankommenden Synchronisiersignal gemischt wird. Das Ausgangssignal der Mischschaltung 55 wird über die Leitung 361 dem Fernsehmonitor 18 zugeführt. Das Zeitdiagramm in Figur 19 zeigt schematisch die Signalverarbeitung in der Auswerteinrichtung 36 für Signale, die von 3 der 8 Ausgangspufferspeicher 351—358 abgegeben werden. Im oberen Teil der Fig. 19 ist ein Taktsignal 170 dargestellt, das die Signalverarbeitung steuert. Darunter sind drei "read enab-ling" Signale 171, 172, 173 und die jeweils einem der "read enabling"-Impulse entsprechenden Gruppen von 64 digitalen Bildsignalen 174 (1a, 2a, ..., 64a), 175 (1b, 2b, ..., 64b), 176 (1c, 2c, ..., 64c) dargestellt. Fig. 19 zeigt ausserdem das Summensignal 177 am Ausgang der Addierschaltung 51, das Summensignal 178 am Ausgang der Addierschaltung 52 und das Ausgangssignal 179 der Quotientbildungsschaltung 53. Da die im Summensignal 178 enthaltenen Amplitudenwerte als Dividend verwendet werden, ist in Fig. 19 ihr Wert mit ÷1, ÷2, etc. dargestellt.

Das Taktsignal 170 in Fig. 19 hat eine Frequenz, die das Zweifache der Frequenz des Taktsignals 165 in Fig. 18 ist. Dies bewirkt, dass bei der Signalverarbeitung in der Auswerteeinrichtung 36 der Inhalt von jeder Speicherstelle des Hauptspeichers 34 bei der Erzeugung der Bildsignale für je zwei Pixel auf dem Bildschirm des Fernsehmonitors 18 berücksichtigt wird. Dieses Frequenzverhältnis zwischen den Taktsignalen 170 und 165 ist zweckmässig, wenn die Bildsignale in Speicherstellen des Hauptspeichers 34 gespeichert werden, deren geometrische Anordnung von derjenigen der abgetasteten Stellen abweicht. Andernfalls ist es zweckmässig, Taktsignale 170 und 165 zu verwenden, die dieselbe Frequenz haben.

Mit einer geeigneten Ausgestaltung der Auswerteeinrichtung 36 kann zur Erzeugung von jedem Bildsignal des zusammengesetzten Querschnittbildes der Spitzen-, Minimal- oder Medianwert der entsprechenden im Hauptspeicher 34 gespeicherten Bildsignale gebildet werden, die verschiedene Echos von ein und derselben abgetasteten Stelle darstellen. Hierfür kann auch eine Kombination von wenigstens zwei solcher Werte verwendet werden.

In dem oben beschriebenen Bildsignalspeicher 117 in Fig. 4 werden immer 6 Bit pro Speicherstelle verwendet. Nach der Division in der Quotientbildungsschaltung 53 in der Auswerteeinrichtung 36 werden 8 signifikante Bits zur Digital-Analog-Umsetzung benutzt.

Die Bildfolgefrequenz des auf dem Bildschirm des Fernsehmonitors 18 dargestellten zusammengesetzten Querschnittsbild berechnet sich wie folgt: für die Abtastung einer Abtastlinie werden 256 µs benötigt. Für 8 Abtastungen mit je 64 Abtastlinien werden also 131 ms benötigt. Daraus ergibt sich eine Bildfolgefrequenz von ca. 7,6 Bilder/Sekunde. Daraus ist auch ersichtlich, dass alle 16 ms ein neues Teilbild erzeugt wird.

In einer vorteilhaften Ausführungsform des Bildsignalspeichers 117 enthält der Hauptspeicher 34 eine Zahl von Speichereinheiten, die um eins grösser ist als die Zahl der mit dem Ultraschall-Abbildungssystem zur Erzeugung des zusammengesetzten Querschnittbildes durchgeführten Abtastungen. Wenn z.B. die 8 in Fig. 14 gezeigten Abtastungen 131—138 durchgeführt werden, enthält der Hauptspeicher 34 neuen Speichereinheiten 341—349. In dieser Ausführungsform ist der Bildsignalspeicher 117 so eingerichtet, dass während der ganzen Dauer jeder der Abtastungen die dadurch gewonnenen Bildsignale wahlweise in eine der Speichereinheiten 341—349 geschrieben werden und dass in dem selben Zeitintervall die in den übrigen Speichereinheiten gespeicherten Bildsignale zur Erzeugung eines zusammengesetzten Echzeit-Querschnittbildes gelesen werden, wobei bei der darauf folgenden Abtastung die dadurch gewonnenen Bildsignale in der Speichereinheit geschrieben werden, in der die zu Beginn dieser Abtastung älteste, im Bildsignalspeicher gespeicherte Bildinformation vorhanden ist.

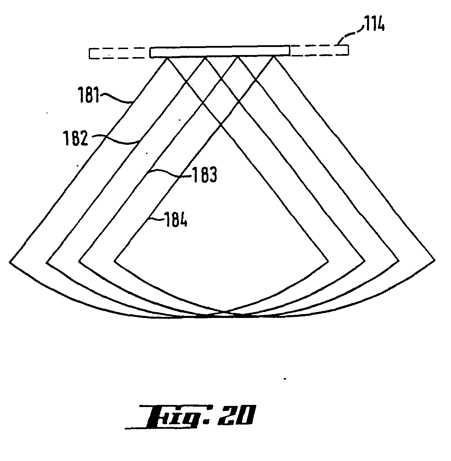

Die obige Beschreibung von Ausführungsbeispielen geht davon aus, dass der untersuchte Körperteil mit einem Abtastmuster der in Fig. 1 gezeigten Art abgetastet wird. Die Anwendung der vorliegenden Erfindung ist jedoch nicht auf solche Abtastmuster beschränkt. Sie kann z.B. auch dann mit Vorteil verwendet werden, wenn mit der Wandleranordnung 114 eine in Fig. 20 dargestellte Folge von sich teilweise überdeckenden Sektor-Scans 181—184 durchgeführt werden. Solche Sektor-Scans müssen ausserdem nicht unbedingt mit der oben beschriebenen Wandleranordnung 114 durchgeführt werden, da sie auch mit einer oszillierenden oder einer rotierenden Wandlereinrichtung durchgeführt werden können. Auf die Einzelheiten der Konstruktion und der Funktion solcher Wandlereinrichtungen wird in der vorliegenden Beschreibung nicht eingegangen.

## Patentansprüche

1. Verfahren zum Erzeugen eines zusammengesetzten Ultraschall-Querschnittbildes eines Körpers, bei welchem

ein jeder von mehreren sich gegenseitig überlappenden Bereichen einer Querschnittsebene des Körpers jeweils entlang einer Vielzahl von Abtastzeilen, die einen vorgegebenen Typ von Abtastmuster realisieren, mittels Ultraschall-Impulsen abgetastet wird,

aus den bei der Abtastung eines jeden Bereichs jeweils empfangenen Echosignalen ein Satz von digitalen Bildsignalen erzeugt und jeder solcher Satz in einer separaten Speichereinheit gespeichert wird, wobei die Speicherung der Bildsignale in jeder Speichereinheit in einer durch die Aufeinanderfolge der Abtastzeilen bestimmten Reihenfolge erfolgt,

durch Kombination von jeweils der gleichen Stelle der Querschnittsebene zugeordneten Bildsignalen der einzelnen Sätze ein neuer Satz von zusammengesetzten Bildsignalen erzeugt wird,

das dem neuen Satz entsprechende zusammengesetzte Querschnittbild zur Anzeige gebracht wird, dadurch gekennzeichnet, daß

das zusammengesetzte Querschnittbild mit einem Fernsehmonitor angezeigt wird,

die Einspeicherung eines Satzes von Bildsignalen in eine der Speichereinheiten jeweils innerhalb eines Zeitintervalls erfolgt, das einer Bildperiode des Fernsehmonitors entspricht,

jeder neue Satz von zusammengesetzten Bildsignalen synchron mit der Bildfrequenz des Fernsehmonitors gebildet wird, wobei die zusammengesetzten Bildsignale eines jeden solchen Satzes in der Reihenfolge ihrer Darstellung auf dem Monitor erzeugt werden, indem die einzelnen der momentanen Fernsehzeilenposition nach Maßgabe des darzustellenden Abtastmusters zugeordneten Bildsignale jeder Speichereinheit jeweils gleichzeitig aus den einzelnen Speichereinheiten ausgelesen und überlagert werden.

2. Bildsignal-Verarbeitungseinheit für ein Ultraschall-Abbildungssystem, welches eine Sendeeinrichtung (15) zur Abtastung von mehreren sich teilweise überdeckenden Bereichen (1, 2, 3; 131—138) einer Querschnittsebene eines Körpers (11) jeweils entlang einer Vielzahl von einen vorgegebenen Typ von Abtastmuster realisierenden Abtastzeilen (4, 5, 6; 106) mittels Ultraschallimpulsen, eine Empfangseinrichtung (15, 151) zum Empfang der Echosignale und zur Umwandlung der Echosignale eines jeden abgetasteten Bereichs in einen Satz von digitalen Bildsignalen, sowie eine Anzeigevorrichtung (18) für ein durch die Überlagerung der Bildsignale der abgetasteten Bereiche erhaltenes zusammengesetztes Querschnittsbild enthält, welche Bildsignal-Verarbeitungseinheit einen digitalen Bildsignalspeicher (117) mit einer Vielzahl von getrennten Speichereinheiten (341—348), Steuereinrichtungen (19) für das Beschreiben der Speichereinheiten mit jeweils einem anderen Satz von Bildsignalen eines abgetasteten Bereichs und zum Auslesen der Speichereinheiten, sowie Überlagerungseinrichtungen (36) zur wiederholten Erzeugung eines der Anzeigevorrichtung zugeführten neuen Satzes von zusammengesetzten Bildsignalen durch Kombination von jeweils der gleichen Stelle der Querschnittsebene zugeordneten Bildsignalen einer vorgegebenen Zahl von Speichereinheiten aufweist, dadurch gekennzeichnet, daß

die Steuereinrichtungen (19) Mittel zur Synchronisation sowohl der Abtastung der Bereiche als auch der Einspeicherung der Sätze von Bildsignalen in jeweils eine der Speichereinheiten sowie der Bildung der neuen Sätze von zusammengesetzten Bildsignalen mit der Bildfrequenz eines Fernsehmonitors und ferner Mittel zur Steuerung der Erzeugung der zusammengesetzten Bildsignale eines jeden neuen Satzes in einer ihre Darstellung auf einem Fernsehmonitor erlaubenden Reihenfolge aufweisen, welche so ausgebildet sind, daß die der momentanen Fernsehzeilenposition nach Maßgabe des darzustellenden Abtastmusters zugeordneten gespeicherten Bildsignale jeweils gleichzeitig aus den Speichereinheiten (341—348) ausgelesen und den Überlagerungseinrichtungen (36) zugeführt werden.

3. Einheit gemäß Anspruch 2, dadurch gekennzeichnet, daß der Bildsignalspeicher (117)

a) einen ersten Pufferspeicher (31) zur Speicherung der von der Empfangseinrichtung gelieferten Bildsignale,

b) einen Demultiplexer (32), der im Ansprechen auf Steuersignale der Steuereinrichtungen (19) den Datenausgang des ersten Pufferspeichers (31) wahlweise mit dem Dateneingang einer der Speichereinheiten (341—348) verbindet, und

c) eine Vielzahl von zweiten Pufferspeichern (351—358) enthält, deren Dateneingang jeweils mit dem Datenausgang einer der Speichereinheiten (341—348) verbunden ist, und deren Datenausgang jeweils mit einem separaten Eingang der Überlagerungseinrichtungen (36) verbunden ist.

4. Einheit gemäß einem der Ansprüche 2 oder 3, dadurch gekennzeichnet, daß der Bildsignalspeicher (117) so eingerichtet ist, daß in jeder Speichereinheit (341—348) die Bildsignale in einem Format, d.h. in einer Anordnung von Speicherstellen, gespeichert werden, die von der geometrischen Anordnung der abgetasteten Stellen unabhängig ist.

5. Einheit gemäß einem der Ansprüche 2 oder 3, dadurch gekennzeichnet, daß in jeder Speichereinheit (341—348) die Bildsignale in einem Format, d.h. in einer Anordnung von Speicherstellen gespeichert werden, die der geometrischen Anordnung der abgetasteten Stellen entspricht.

6. Einheit gemäß einem der Ansprüche 2 bis 5, dadurch gekennzeichnet, daß die Zahl der Speichereinheiten (341—348) größer als die Zahl der abgetasteten Bereiche (131—138) ist.

7. Einheit gemäß Anspruch 6, dadurch gekennzeichnet, daß die Mittel zur Synchronisation und die Mittel zur Steuerung der Erzeugung der zusammengesetzten Bildsignale so ausgebildet sind, daß während der ganzen Dauer jeder der Abtastungen die dadurch gewonnenen Bildsignale wahlweise in eine der Speichereinheiten (341—348) geschrieben werden und daß in demselben Zeitintervall die in den übrigen Speichereinheiten gespeicherten Bildsignale gelesen werden, wobei bei der darauffolgenden Abtastung die dadurch gewonnenen Bildsignale in die Speichereinheit geschrieben werden, in der die zu Beginn dieser Abtastung älteste, im Bildsignalspeicher gespeicherte Bildinformation vorhanden ist.

8. Einheit gemäß Ansprüchen 2 bis 7, dadurch gekennzeichnet, daß das zusammengesetzte Bildsignal jeweils dem Mittel-, Spitzen- oder Minimalwert der überlagerten Bildsignale entspricht.

9. Ultraschall-Abbildungssystem mit einer Sendeeinrichtung (15) zur Abtastung von mehreren sich teilweise überdeckenden Bereichen (1, 2, 3; 131—138) einer Querschnittsebene eines Körpers (11) jeweils entlang einer Vielzahl von einen vorgegebenen Typ von Abastmuster realisierenden Abtastzeilen (4, 5, 6; 106) mittels Ultraschallimpulsen, einer Empfangseinrichtung (15, 151) zum Empfang der Echosignale und zur Umwandlung der Echosignale eines jeden abgetasteten Bereichs in einen Satz von digitalen Bildsignalen, einer Bildsignal-Verarbeitungseinheit gemäß einem der Ansprüche 2 bis 8 und einem Fernsehmonitor (18) zur Anzeige eines durch die Überlagerung der Bildsignale der abgetasteten Bereiche erhaltenen zusammengesetzten Querschnittsbildes.

**Revendications**

1. Procédé destiné à former une image ultrasonique composée, en coupe, d'un corps, dans lequel

chacune des multiples zones, qui se recouvrent réciproquement, d'un plan en coupe du corps est explorée au moyen d'impulsions ultrasoniques respectivement le long de multiples lignes d'exploration, qui réalisent un type déterminé au préalable d'échantillons d'exploration,

un jeu de signaux numériques d'image est engendré à partir des échos reçus respectivement lors de l'exploration de chaque zone, et chaque jeu de ce type est mémorisé dans une unité de mémoire séparée, la mémorisation des signaux d'image étant effectuée dans chaque unité de mémorisation dans une séquence déterminée par la succession des lignes d'exploration,

un nouveau jeu de signaux numériques composés est engendré par combinaison des signaux d'image des différents jeux correspondant respectivement au même emplacement du plan de coupe,

l'image composée en coupe correspondant au nouveau jeu est produite sur l'affichage, caractérisé en ce que

l'image en coupe composée est affichée à l'aide d'un moniteur de télévision,

la mémorisation d'un jeu de signaux d'image dans l'une des unités de mémorisation se fait respectivement à l'intérieur d'un intervalle de temps qui correspond à une période d'image du moniteur de télévision,

chaque nouveau jeu de signaux d'image composés est formé de façon synchrone avec la fréquence d'image du moniteur de télévision, les signaux composés d'image de chaque jeu de ce type étant engendrés sleon la séquence d'une représentation sur le moniteur, tandis que les signaux d'image de chaque unité de mémoire, correspondant à la position instantanée de lignes de télévision selon l'échantillon d'exploration à représenter, sont respectivement lus dans les différentes unités de mémoire et simultanément superposés.

2. Dispositif de traitement de signaux d'image destiné à un système de formation d'image ultrasonique, qui comprend un dispositif d'émission (15) destiné à l'exploration de plusieurs zones (1, 2, 3; 131 à 138), qui se recouvrent partiellement, d'un plan de coupe d'un corps (11) respectivement le long de plusieurs lignes d'exploration (4, 5, 6; 106) réalisant un type déterminé au préalable d'échantillon d'exploration, au moyen d'impulsions ultrasoniques, un dispositif de réception (15, 151) pour recevoir les signaux d'échos et pour transformer les signaux d'échos de chacune des zones explorées en un jeu de signaux d'image numériques, ainsi qu'un dispositif d'affichage (18) destiné à une image composée, en coupe, obtenue par superposition des signaux d'image des zones explorées, ladite unité de traitement de signaux d'image comportant une mémoire numérique (117) de signaux d'image comprenant plusieurs unités de mémoire séparées (341 à 348), des dispositifs de commande (19) destinés à écrire dans les unités de mémoire respectivement un autre jeu de signaux d'image d'une zone explorée et à lire ces unités de mémoire, ainsi que des dispositifs de superposition (36) pour engendrer derechef un nouveau jeu de signaux d'image, amenés au dispositif d'affichage, composés par combinaison de signaux d'image, provenant d'un nombre déterminé au préalable d'unités de mémoire, et correspondant respectivement au même emplacement du plan de coupe, caractérisé en ce que

les dispositifs de commande (19) comportent des moyens de synchronisation tant de l'exploration des zones que de la mémorisation des jeux de signaux d'image respectivement dans l'une des unités de mémoire ainsi que de la formation des nouveaux jeux de signaux d'image composés selon la fréquence d'image d'un moniteur de télévision, et en outre des moyens de commande de génération des signaux d'image composés de chacun des nouveaux jeux dans une séquence permettant leur représentation sur un moniteur de télévision, cette séquence étant constituée de telle façon que les signaux d'image mémorisés correspondant à la position instantanée de lignes de télévision selon l'échantillon d'exploration à représenter sont respectivement lus dans les unités de mémoire (341 à 348) et simultanément amenés aux dispositifs de superposition (36).

3. Unité selon la revendication 2, caractérisée en ce que la mémoire (117) de signaux d'image comprend

(a) une première mémoire tampon (31) pour la mémorisation des signaux d'image envoyés par le dispositif de réception,

(b) un démultiplexeur (32) qui relie à volonté, en réponse à des signaux de commande provenant des dispositifs de commande (19), la sortie de données de la première mémoire tampon (31) à l'entrée de données de l'une des unités de mémoire (341 à 348), et

(c) plusieurs deuxièmes mémoires tampons (351 à 358) dont l'entrée de données est respectivement reliée à la sortie de données de l'une des unités de mémoire (341 à 348) et dont la sortie de données sont respectivement reliées à une entrée séparée des dispositifs de superposition (36).

4. Unité selon l'une des revendications 2 ou 3, caractérisée en ce que la mémoire (117) de signaux d'image est d'une structure telle que les signaux d'image (341 à 348) sont mémorisés dans chaque unité de mémoire selon un format, c'est à dire une disposition d'emplacement de mémoires, qui est indépendant de la disposition géométrique des emplacements explorés.

5. Unité selon l'une des revendications 2 ou 3, caractérisée en ce que les signaux d'image sont mémorisés dans chaque unité de mémoire (341 à 348), selon un format, c'est à dire une disposition d'emplacement de mémoires, qui correspond à la disposition géométrique des emplacements explorés.

6. Unité selon l'une des revendications 2 à 5, caractérisée en ce que le nombre des unités de mémoire (341 à 348) est supérieur au nombre des zones explorées (131 à 138).

7. Unité selon la revendication 6, caractérisée en ce que les moyens de synchronisation et les moyens de commande de la génération des signaux d'image composés sont constitués de telle façon que, pendant toute la durée de chacune des explorations, les signaux de commande ainsi engendrés sont écrits à volonté dans l'une des unités de mémoire (341 à 348) et en ce que, dans le même intervalle de temps, les signaux d'image mémorisés dans les autres unités de mémoire sont lus, les signaux d'image obtenus lors de l'exploration qui suit étant écrits dans l'unité de mémoire dans laquelle est présente l'information d'image mémorisée dans la mémoire de signaux d'image la plus ancienne au début de cette exploration.

8. Unité selon les revendications 2 à 7, caractérisée en ce que le signal d'image composé correspond respectivement à la valeur moyenne, maximale ou minimale des signaux d'image superposés.

9. Système de formation d'image ultrasonique, qui comprend un dispositif d'émission (15) destiné à l'exploration de plusieurs zones (1, 2, 3; 131 à 138), qui se recouvrent partiellement, d'un plan de coupe d'un corps (11) respectivement le long de plusieurs lignes d'exploration (4, 5, 6; 106) réalisant un type déterminé au préalable d'échantillon d'exploration, au moyen d'impulsions ultrasoniques, un dispositif de réception (15, 151) pour recevoir les signaux d'échos et pour transformer les signaux d'échos de chacune des zones explorées en un jeu de signaux d'image numériques, une unité de traitement de signaux d'image selon l'une des revendications 2 à 8 et un moniteur de télévision (18) pour l'affichage d'une image composée, en coupe, obtenue par la superposition des signaux d'image des zones explorées.

**Claims**

1. A method of producing a compound ultrasonic cross-sectional image of a body in which:

each of a plurality of overlapping zones of a cross-sectional plane of the body is scanned by ultrasound pulses in each case along a plurality of scanning lines which realise a predetermined type of scanning pattern,

a set of digital image signals is produced from the echo signals received in each case from scanning each zone and each such set is stored in a separate memory unit, the storage of the image signals in each memory unit being effected in a sequence determined by the sequence of scanning lines,

a new set of compound image signals is produced by combining image signals of the individual sets, such image signals in each case being associated with the same place of the cross-sectional plane,

the compound cross-sectional image corresponding to the new set is displayed, characterised in that

the compound cross-sectional image is displayed by a television monitor,

the storage of a set of image signals in one of the memory units is effected in each case within a time interval corresponding to one image period of the television monitor,

each new set of compound image signals is formed synchronously with the image frequency of the television monitor, the compound image signals of each such set being produced on the monitor in the sequence of their presentation, the individual image signals of each memory unit which are associated with the instantaneous television line position in accordance with the scanning pattern to be presented being in each case simultaneously read out of the individual memory units and superimposed.

2. An image signal processing unit for an ultrasonic imaging system, comprising a transmission device (15) for scanning a plurality of partially overlapping zones (1, 2, 3; 131—138) of a cross-sectional plane of a body (11) in each case along a plurality of scanning lines (4, 5, 6; 106) realising a predetermined type fo scanning pattern, by means of ultrasound pulses, a receiving device (15, 151) for receiving the echo signals and for converting the echo signals of each scanned zone into a set of digital image signals, and a display device (18) for a compound cross-sectional image obtained by superimposing the image signals of the scanned zones, which image signal processing unit comprises a digital image signal memory (117) having a plurality of separate memory units (341—348), control means (19) for writing into the memory units in each case another set of image signals of a scanned zone and for reading out of the memory units, and superimposition means (36) for the repeated production of a new set of compound image signals fed to the display device, by combining image signals of a predetermined number of memory units, such image signals in each case being associated with the same place of the cross-sectional plane, characterised in that

the control means (19) comprise means for synchronising both the scanning of the zones and for storing the sets of image signals in one of the memory units in each case and for forming the new sets of compound image signals with the image frequency of a television monitor and also means for controlling the production of the compound image signals of each new set in a sequence allowing them to be presented on a television monitor, such means being so devised that the stored image signals associated with the instantaneous television line position in accordance with the scanning pattern to be presented are in each case simultaneously read out of the memory units (341—348) and fed to the superimposition means (36).

3. A unit according to claim 2, characterised in that the image signal memory (117)

a) comprises a first buffer memory (31) for storing the image signals delivered by the receiving device,

b) a demultiplexer (32) which in response to control signals of the control means (19) connects the data output of the first buffer memory (31) selectively to the date input of one of the memory units (341—348), and

c) a plurality of second buffer memories (351—358), the data input of which is in each case connected to the data output of one of the memory units (341—348), and the data output of which is in each case connected to a separate input of the superimposition means (36).

4. A unit according to either of claims 2 or 3, characterised in that the image signal memory (117) is so devised that in each memory unit (341—348) the image signals are stored in a format, i.e. in an arrangement of memory locations, which is independent of the geometric arrangement of the scanned places.

5. A unit according to either of claims 2 or 3, characterised in that the image signals are stored in each memory unit (341—348) in a format, i.e. an arrangement of memory locations, which corresponds to the geometric arrangement of the scanned places.

6. A unit according to any one of claims 2 to 5, characterised in that the number of memory units (341—348) is greater than the number of scanned zones (131—138).

7. A unit according to claim 6, characterised in that the means for synchronisation and the means for controlling the production of the compound image signals are so devised that for the entire duration of each of the scans the image signals obtained as a result are selectively written into one of the memory units (341—348) and in that in the same time interval the image signals stored in the other memory units are read, while on the following scan the image signals obtained as a result are written into the memory unit in which the oldest image information at the beginning of this scan and stored in the image signal memory is present.

8. A unit according to claims 2 to 7, characterised in that the compound image signal corresponds in each case to the mean, peak or minimum value of the superimposed signals.

9. An ultrasonic imaging system comprising a transmission device (15), for scanning a plurality of partially overlapping zones (1, 2, 3; 131—138) of a cross-sectional plane of a body (11) in each case along a plurality of scanning lines (4, 5, 6; 106) realising a predetermined type of scanning pattern, by means of ultrasound pulses, a receiving device (15, 151) for receiving the echo signals and for converting the echo signals of each scanned zone into a set of digital image signals, an image signal processing unit according to any one of claims 2 to 8, and a television monitor (18) for displaying a compound cross-sectional image obtained by superimposing the image signals of the scanned zones.

*Fig. 1*

21   114

72                                    72

71                  —73        _Fig. 2_

114                           72

72                              21

72

75

74                            _Fig. 3_

Fig. 4

*Fig: 5*

_Fig. 6_

_Fig. 7_

461  83  81  84  471  351

82

442  91  85  87

86  88

481  441

EP 0 176 038 B1

Fig. 8

Fig. 9

Fig. 13

39

122

123

124

Fig. 11

38

Fig. 12

38

Fig. 10

α

105

37

108

37

107

106

EP 0 176 038 B1

131　132　133　134　135　136　137　138

106

_Fig. 14_

341　342　343　344　345　346　347　348　349

38

_Fig. 15_

122　141　142　143　144　145　146　147　148

_Fig. 16_

Fig. 17

EP 0 176 038 B1

*Fig. 18*

EP 0 176 038 B1

*Fig. 19*

EP 0 176 038 B1

114

181

182

183

184

_Fig. 20_